# EUROPEAN PATENT APPLICATION

(11) **EP 0 850 756 A2**
(43) Date of publication of application: **01.07.1998**
(21) Application number: 97122835.8
(22) Date of filing: 23.12.1997
(51) Int. Cl.: B32B 27/32, B65D 65/40

(54) **Container and sheet of propylene polymer laminate**

(30) Priority: 25.12.1996 JP 346205/96; 25.12.1996 JP 346208/96
(71) Applicant: Japan Polychem Corporation, Tokyo 100 (JP)
(72) Inventor: Fujimura, Kazumasa, c/o Japan Polychem Corp., Yokkaichi-shi, Mie (JP); Inagaki, Hitoshi, c/o Japan Polychem Corp., Yokkaichi-shi, Mie (JP)
(74) Representative: VOSSIUS & PARTNER

(57) **Abstract**

This invention provides a sheet or container of a propylene polymer laminate which has excellent glossiness, transparency, rigidity and impact resistance.

Particularly it provides a sheet or container of a propylene polymer laminate which comprises surface layers, each layer being comprised of a thermoplastic resin composition in which 100 parts by weight of a propylene polymer having a density of 0.905 g/cm³ or more and a melt flow rate (MFR) of from 0.7 to 20 g/10 min. is blended with 1 to 20 parts by weight of an ethylene-α-olefin random copolymer which is polymerized using a metallocene catalyst and has an ethylene content of from 99 to 50% by weight, a density of 0.930 g/cm³ or less and an MFR value of from 0.3 to 20 g/10 min., and an intermediate layer comprised of a propylene-α-olefin random copolymer having an MFR value of from 0.3 to 5 g/10 min. and a propylene content of from 99 to 90% by weight.

## Description

This invention relates to a container or sheet of a propylene polymer laminate which is excellent in glossiness, transparency, rigidity and impact resistance.

Being excellent in moldability, rigidity and glossiness and also in hygienic property and heat resistance, propylene polymers have been used in various containers by making them into a sheet-like form and molding the sheet by carrying out thermoforming (e.g., vacuum forming, pressure forming), similar to the case of polystyrene resins, polyvinyl chloride resins, polyester resins and the like other thermoplastic resins.

In recent years, a demand for containers produced by using a propylene polymer having excellent heat resistance has gradually been increasing because, particularly, of the popularization of food articles which are taken after their heating with a microwave oven.

Such containers or sheets to be molded into containers require superior external appearances, particularly their excellent surface glossiness and such a good transparency that the contents can be seen clearly.

However, being crystalline resins, propylene polymers are thought to be inferior in glossiness and transparency in comparison with the aforementioned polystyrene resins, polyvinyl chloride resins and polyester resins.

Because of this, a method in which a propylene-ethylene random copolymer is used or a method in which a propylene polymer is blended with various types of crystal nucleating agent is known as a method for the improvement of glossiness and transparency of propylene polymers, but their effects are not sufficient.

On the other hand, a method in which a container is formed by holding its surfaces between mirror-finished metals at the time of the sheet forming of a propylene polymer or a method in which a container or a sheet is rapidly cooled at a low temperature of 30°C or less is known as a forming method for improving glossiness and transparency.

However, when the aforementioned propylene-ethylene random copolymer is used, rigidity of the resulting sheet or container is reduced and, even if such a propylene polymer sheet having improved glossiness and transparency is used as a raw material, performance of a container cannot be maintained when the sheet is processed into the container by thermoforming, so that the thus obtained container has reduced glossiness and transparency.

In consequence, these disadvantages must be eliminated by all means when a propylene polymer sheet is used in thermo-formed containers.

Thus, it is the object of the present invention to overcome the aforementioned prior art problems.

This object has been achieved by the surprising finding that a laminate container having excellent glossiness, transparency, rigidity and impact resistance can be obtained by the use of a laminate sheet prepared using a thermoplastic resin composition composed of a specified propylene polymer and an ethylene-α-olefin random copolymer.

Accordingly, each of the sheet and container of a propylene polymer laminate of the present invention comprises surface layers, each layer being comprised of a thermoplastic resin composition in which 100 parts by weight of a propylene polymer having a density of 0.905 g/cm³ or more and a melt flow rate (MFR) of from 0.7 to 20 g/10 min. is blended with 1 to 20 parts by weight of an ethylene-α-olefin random copolymer which is polymerized using a metallocene catalyst and has an ethylene content of from 99 to 50% by weight, a density of 0.930 g/cm³ or less and an MFR value of from 0.3 to 20 g/10 min., and an intermediate layer comprised of a propylene-α-olefin random copolymer having an MFR value of from 0.3 to 5 g/10 min. and a propylene content of from 99 to 90% by weight.

### [I] Sheet and container of propylene polymer laminate

### (1) Construction of layers

Each of the sheet and container of the propylene polymer laminate of the present invention is basically formed from a three layer structure consisting of surface layers and an intermediate layer, and it is illustratively a sheet or container formed from a surface layer, an intermediate layer and a surface layer (reverse side layer) or further having a structure of four layers, five layers or seven or more layers in which other resin layer is formed between the surface layer and the intermediate layer and/or between the intermediate layer and the reverse side layer (surface layer).

### (2) Raw materials

### (A) Surface layer

### (a) Propylene polymer (component a)

The propylene polymer (component a) to be used in the surface layers of the sheet and container of propylene polymer laminate of the present invention is propylene alone or a random copolymer of a propylene having a propylene content of 97% by weight or more, preferably 98% by weight or more, with α-olefin (e.g., ethylene, butene-1, pentene-1, hexene-1, 4-methylpentene-1). Of them, propylene homopolymer is preferably used.

### Density

The aforementioned propylene polymer (component a) has a density of 0.905 g/cm³ or more, preferably 0.906 g/cm³ or more, more preferably 0.907 g/cm³ or more, when measured in accordance with the procedure of JIS-K7112 (23°C). The upper limit of the density of the propylene polymer (component a) is preferably 0.915 g/cm³, more preferably 0.913 g/cm³, particularly preferably 0.912 g/cm³.

The density if less than the above lower limit range could result in insufficient glossiness and rigidity. The density if more than the above upper limit could result in insufficient impact resistance.

### MFR (melt flow rate)

The aforementioned propylene polymer (component a) has an MFR value (melt flow rate) of from 0.7 to 20 kg/10 min., preferably from 1 to 10 g/10 min., more preferably from 1.5 to 5 g/10 min., when measured in accordance with the procedure of JIS-K7210 (23°C, 2.16 kg load).

The MFR value if less than the above range could cause poor fluidity at the time of laminate sheet forming, thus resulting in a sheet having irregular thickness and entailing a difficulty in obtaining a container having a constant thickness. Also, the value if larger than the above range could entail poor forming of the sheet into a container.

### (b) Ethylene-α-olefin random copolymer (component b)

### Metallocene catalyst

The ethylene-α-olefin random copolymer (component b) to be used in the surface layers of the sheet and container of propylene polymer laminate of the present invention is an ethylene-α-olefin random copolymer polymerized using a metallocene catalyst, and said ethylene-α-olefin random copolymer may be produced for example by a method disclosed in JP-A-58-19309 (the term "JP-A" as used herein means an "unexamined published Japanese patent application"), JP-A-59-95292, JP-A-60-35005, JP-A-60-35006, JP-A-60-35007, JP-A-60-35008, JP-A-60-35009, JP-A-61-130314, JP-A-3-163088, European Patent Publication 420,436, U.S. Patent 5,055,438 or International Publication WO 91/04257, namely a method in which ethylene as the main component and an α-olefin having 3 to 18 carbon atoms as the sub-component are copolymerized using a metallocene catalyst, a metallocene/alumoxane catalyst or a catalyst which comprises a metallocene compound as disclosed for example in International Publication WO 92/07123 and a compound described in the following which becomes stable ion by reacting with a metallocene catalyst.

The above-stated compound capable of forming a stable anion by reacting with a metallocene compound is either an ionic compound having ion pairs of cations and anions, or an electrophilic compound. Such a compound forms a stable ion by reacting with a metallocene compound, thereby providing an active species for polymerization.

### Ionic compound

Among these compounds, the ionic compound is represented by the following formula (I).
[Q]^{m+}[Y]^{m-} (In the formula, m is an integer of 1 or more.)

In the above formula, Q is the cation component of the ionic compound, and its examples include a carbonium cation, a tropylium cation, an ammonium cation, an oxonium cation, a sulfonium cation, a phosphonium cation and the like, as well as cations of metals and organic metals which are apt to be reduced by themselves.

These cations may be not only those cations which give protons as disclosed in JP-W-1-501950 (the term "JP-W" as used herein means an "unexamined published Japanese international patent application") but also those cations which do not give protons.

Illustrative examples of those cations include triphenylcarbonium, diphenylcarbonium, cycloheptatrienium, indenium, triethylammonium, tripropylammonium, tributylammonium, N,N-dimethylammonium, dipropylammonium, dicyclohexylammonium, triphenylphosphonium, trimethylphosphonium, tri(dimethylphenyl)phosphonium, tri(methylphenyl)phosphonium, triphenylphosphonium, triphenyloxonium, triethyloxonium, pyrylium and the like, as well as silver ion, gold ion, palladium ion, mercury ion, ferrocenium ion and the like.

Also, Y is the anion component of the ionic compound, which becomes stable anion by reacting with a metallocene compound, and its examples include an organic boron compound anion, an organic aluminum compound anion, an organic gallium compound anion, an organic phosphorus compound anion, an organic arsenic compound anion, an organic antimony compound anion and the like.

Their illustrative examples include tetraphenylboron, tetrakis(3,4,5-trifluorophenyl)boron, tetrakis(3,5-di(trifluoromethyl)phenyl)boron, tetrakis(3,5-di(t-butyl)phenyl)boron, tetrakis(pentafluorophenyl)boron, tetraphenylaluminum, tetrakis(3,4,5-trifluorophenyl)aluminum, tetrakis(3,5-di(trifluoromethyl)phenyl)aluminum, tetrakis(3,5-di(t-butyl)phenyl)aluminum, tetrakis(pentafluorophenyl)aluminum, tetraphenylgallium, tetrakis(3,4,5-trifluorophenyl)gallium, tetrakis(3,5-di(trifluoromethyl)phenyl)gallium, tetrakis(3,5-di(t-butyl)phenyl)gallium, tetrakis(pentafluorophenyl)gallium, tetraphenylphosphorus, tetrakis(pentafluorophenyl)phosphorus, tetraphenylarsenic, tetrakis(pentafluorophenyl)arsenic, tetraphenylantimony, tetrakis(pentafluorophenyl)antimony, decaborate, undecaborate, carbadodecaborate, decachlorodecaborate and the like.

### Electrophilic compound

With regard to the electrophilic compound, various metal halide compounds, metal oxides known as solid acids and the like can be exemplified, which are known as members of Lewis acid compounds and form a polymerization activation seed by becoming stable ions when reacted with a matallocene catalyst. Its illustrative examples include magnesium halides, Lewis acid inorganic compounds and the like.

As occasion demands, these catalyst components may be used by supporting them on an inorganic or organic solid carrier, for example by a method disclosed in JP-A-61-296008, JP-A-1-101315 or JP-A-5-301917.

### α-Olefin

The α-olefin to be used herein is an α-olefin which has 3 to 18 carbon atoms, and its illustrative examples include propylene, butene-1, pentene-1, haxene-1, octene-1, heptene-2, 4-methylpentene-1, 4-methylhexane-1, 4,4-dimethylpentene-1 and the like.

Among these α-olefins, an α-olefin having 4 to 12 carbon atoms is desirable, and an α-olefin having 6 to 10 carbon atoms is used most preferably. These α-olefins may be used alone or as a mixture of two or more.

### Ethylene content

It is desirable to use an ethylene-α-olefin random copolymer obtained by copolymerizing these α-olefins in an amount of from 1 to 50% by weight, preferably from 5 to 30% by weight, more preferably from 10 to 30% by weight, with ethylene in an amount of from 99 to 50% by weight, preferably from 95 to 70% by weight, more preferably from 90 to 70% by weight.

### Copolymerization method

As the copolymerization method, vapor phase polymerization, slurry polymerization, solution polymerization, high-pressure ionic polymerization and the like methods can be exemplified.

### Density

The aforementioned ethylene-α-olefin random copolymer (component b) has a density of 0.930 g/cm³ or less, preferably 0.920 g/cm³ or less, more preferably 0.910 g/cm³ or less, when measured in accordance with the procedure of JIS-K7112 (23°C). The lower limit of the density of the ethylene-α-olefin random copolymer (component b) is preferably 0.850 g/cm³, more preferably 0.860 g/cm³, particularly preferably 0.870 g/cm³.

The density if larger than the above upper limit range would result in insufficient glossiness and impact resistance. The density if less than the above lower limit range would result in insufficient rigidity.

### MFR (melt flow rate)

The aforementioned ethylene-α-olefin random copolymer (component b) has an MFR value of from 0.3 to 20 kg/10 min., preferably from 0.5 to 15 g/10 min., more preferably from 0.7 to 10 g/10 min., when measured in accordance with the procedure of JIS-K7210 (190°C, 2.16 kg load).

The MFR value if less than the above range would cause poor fluidity at the time of laminate sheet forming. Also, the value if larger than the above range would entail poor impact resistance.

### (c) Production of thermoplastic resin composition

The thermoplastic resin composition can be obtained by blending the aforementioned propylene polymer (component a) with the aforementioned ethylene-α-olefin random copolymer (component b) and kneading the mixture.

### Blending ratio

Blending ratio of the ethylene-α-olefin random copolymer (component b) in the above described thermoplastic resin composition is from 1 to 20 parts by weight, preferably from 2 to 15 parts by weight, more preferably from 3 to 10 parts by weight, based on 100 parts by weight of the aforementioned propylene polymer (component a).

The blending ratio of ethylene-α-olefin random copolymer (component b) if less than the above range would entail insufficient impact resistance and if larger than the above range would result in reduced rigidity.

### (B) Intermediate layer

### Propylene content

The propylene-α-olefin random copolymer to be used in the intermediate layer of the sheet or container of propylene polymer laminate of the present invention is a random copolymer of 99 to 90% by weight, preferably 98 to 94% by weight, of propylene with α-olefin (e.g., ethylene, butene-1, pentene-1, hexene-1, octene-1, heptene-2, 4-methylpentene-1, 4-methylhexene-1, 4,4-dimethylpentene-1), and, among these copolymers, it is desirable to use a propylene-ethylene random copolymer.

The propylene content of the aforementioned propylene-α-olefin random copolymer if less than the above range would result in reduced rigidity. Also, the content if larger than the above range would entail insufficient transparency and glossiness of the resulting sheet or container.

### MFR (melt flow rate)

The aforementioned propylene-α-olefin random copolymer has a melt flow rate (MFR) of from 0.3 to 5 kg/10 min., preferably from 0.5 to 4 g/10 min., more preferably from 0.7 to 3 g/10 min., when measured in accordance with the procedure of JIS-K7210 (230°C, 2.16 kg load).

The MFR value of the aforementioned propylene-α-olefin random copolymer if less than the above range would cause poor fluidity at the time of the forming of laminate sheet or container, thus resulting in a sheet or container having reduced surface glossiness. Also, the value if larger than the above range would entail insufficient impact resistance of the product.

### (3) Thickness

It is desirable to form a sheet or container of the propylene polymer laminate of the present invention in such a way that it has a whole thickness of from 0.10 to 2 mm, and the total thickness of both surface layers has a ratio of generally from 2 to 40%, preferably from 2.5 to 35%, more preferably from 3 to 30%, based on the whole thickness,

The whole thickness if less than the above range would show a tendency to cause insufficient rigidity. In addition, the whole thickness if larger than the above range would show a tendency to spoil transparency.

Also, the total thickness of both surface layers if less than the above range would show a tendency to spoil thickness-controlling accuracy at the time of the forming of a laminate sheet or container. In addition, the total thickness of both surface layers if larger than the above range would show a tendency to cause insufficient transparency of the resulting sheet or container.

### (4) Other construction materials (optional components)

### (A) Nucleating agent

According to the present invention, it is desirable to add a nucleating agent as an optional component to the raw materials which constitute the aforementioned surface layers and/or intermediate layer.

Examples of said nucleating agent include aromatic carboxylic acid metal salts, aromatic phosphoric acid metal salts, sorbitol derivatives, rosin metal salts and the like.

Preferred among these nucleating agents are aluminum p-t-butylbenzoate, sodium 2,2'-methylenebis(4,6-di-t-butylphenyl)phosphate, aluminum 2,2'-methylenebis(4,6-di-t-butylphenyl)phosphate, p-methyl-benzylidene sorbitol, p-ethyl-benzylidene sorbitol, rosin sodium salt and the like.

### (B) Blending ratio

The above described nucleating agent may be used at a blending ratio of 0.03 to 1 part by weight, preferably from 0.05 to 0.8 part by weight, more preferably from 0.07 to 0.6 part by weight, based on 100 parts by weight of the propylene polymer contained in a layer.

The blending ratio of nucleating agent if less than the above range would bear no effect of the present invention due to insufficient rigidity, while the blending ratio if larger than the above range would cause reduction of mechanical physical properties and bear no improvement of rigidity but rather cause an increase in cost.

### (C) Other components

In addition to the above described nucleating agent, other additive components can be blended within such a range that the effects of the present invention are not significantly spoiled.

Examples of such additive components include those which are generally used in polyolefin, such as an antioxidant, an optical stabilizer, an ultraviolet ray absorbent, a lubricant, an anti-static agent, a defogging agent, a neutralizer, a metal deactivator, a coloring agent, a peroxide, a filler, a fluorescent whitening agent and the like, as well as other resins and elastomers than those which are used in the present invention.

### (5) Optional layer

Optional layer(s) other than the aforementioned essential structural layers can be added to the laminate sheet to be used in the container of propylene polymer laminate of the present invention, within such a range that the effects of the present invention are not significantly spoiled.

Examples of the other optional layer include a regenerated resin, a gas barrier resin, an adhesive resin and the like.

### (6) Application

The propylene polymer laminate sheet of the present invention can be used directly as such, but the sheet can further be formed and processed into a container making use of a usual vacuum, pressure, plug-assist or the like forming machine which is effected by differential pressure. [II] Method for producing sheet and container of propylene polymer laminate

### (1) Production of laminate sheet

The sheet and container of propylene polymer laminate of the present invention can be produced by a usual forming and processing method, for example by making use of a co-extrusion molding machine such as of T-die method, inflation process, calendar roll method or the like type.

In an illustrative example of the production method which uses a co-extrusion T-die molding machine, the polymer and polymer composition of the present invention are charged into an extruder for each layer, melt-kneaded under heating at a temperature of from 200 to 280°C, made into a laminate structure by the feed block equiped with adjustable flow channel, extruded a film from the die lip of the T-die and then made into the laminate film of interest by taking out the extruded film by a take up machine while cooling the melted laminate films by an air knife method, air chamber method, polishing roll method, swing roll method, belt cast method, water cooling method or the like means.

### (2) Production of container

Thereafter, the thus produced laminate film sheet can be formed and processed into containers having various shapes making use of the usual vacuum, pressure, plug-assist and the like forming machines which are effected by differential pressure.

### EXAMPLES

Examples of the present invention are given below by way of illustration and not by way of limitation. Inventive Example 1

### Preparation of thermoplastic resin composition for surface layer use

To 100 parts by weight of a propylene homopolymer having a density of 0.908 g/cm³ and an MFR value of 2.5 g/10 min. were added 0.1 part by weight of tetrakis[methylene-3-(3',5'-di-t-butyl-4'-hydroxyphenyl)propionate]methane and 0.1 part by weight of tris(2,4-di-t-butylphenyl)phosphite as antioxidants, 0.1 part by weight of calcium stearate as a neutralizer, 0.2 part by weight of a sorbitol derivative ("Gelall DH", manufactured by New Japan Chemical) as a nucleating agent and 10 parts by weight of an ethylene-hexene-1 random copolymer having a density of 0.895 g/cm³, an MFR value of 2.2 g/10 min. and a hexene content of 18.5% by weight which has been polymerized using a metallocene catalyst, subsequently mixing them using a screw extruder at 250°C to obtain a thermoplastic resin composition for surface layer use.

### Preparation of thermoplastic resin for intermediate layer use

To 100 parts by weight of a propylene-ethylene random copolymer having an MFR value of 1.8 g/10 min. and an ethylene content of 3.0% by weight were added 0.1 part by weight of tetrakis[methylene-3-(3',5'-di-t-butyl-4'-hydroxyphenyl)propionate]methane and 0.1 part by weight of tris(2,4-di-t-butylphenyl)phosphite as antioxidants, 0.1 part by weight of calcium stearate as a neutralizer and 0.2 part by weight of a sorbitol derivative ("Gelall DH", manufactured by New Japan chemical) as a nucleating agent, subsequently mixing them using a screw extruder at 250°C to obtain a thermoplastic resin for intermediate layer use.

### Production of propylene polymer laminate sheet

The aforementioned thermoplastic resin composition for surface layer use was put into both surface layer sides of a feed block of two-material three-layer structure from an extruder of 45 mm in screw diameter which was heated at 240°C, and the thermoplastic resin for intermediate layer use was put into the intermediate layer side of the above described feed block from an extruder of 65 mm in screw diameter which was heated at 240°C.

These materials wore extruded into a sheet-like form with a T-die having a width of 350 mm which was heated at 230°C, and the sheet was pulled out while cooling and solidifying by holding it between two mirror-finished rollers (treated by hard chrome plating) inside of which was circulated with cooling water of 50°C, thereby obtaining a propylene polymer laminate sheet. Thickness of the thus obtained propylene polymer laminate sheet was 300 µm in total, of which each of the surface layers was 30 µm and the intermediate layer was 240 µm.

Young's modulus in flexure and HAZE of the propylene polymer laminate sheet were measured in accordance with the procedure of JIS-K6758, and its Du Pont impact strength in accordance with the procedure of ASTM-D2794.

The results are shown in Table 1.

### Forming of propylene polymer laminate container

Using an indirect heating and pressure heating type pressure forming machine (name: Cosmic Forming Machine) manufactured by Asano Research Institute, a container having a length of 13 cm, a width of 18 cm and a depth of 1 cm was formed from the above propylene polymer laminate sheet by changing the sheet temperature from 140 to 160°C at an interval of 10°C and under a pressure of 5 kg/cm².

The shape and appearances (transparency and glossiness) of the thus obtained container were observed with the naked eye, and HAZE of the container bottom at a sheet temperature of 150°C was also measured.

The results are shown in Table 1.

### Inventive Examples 2 to 4 and Comparative Examples 1 to 11

Propylene polymer laminate containers were produced and evaluated in the same manner as described in Inventive Example 1, except that formulations of the thermoplastic resins for surface layers and intermediate layer use were changed as shown in Tables 1 to 5.

The results are shown in Tables 1 to 5.

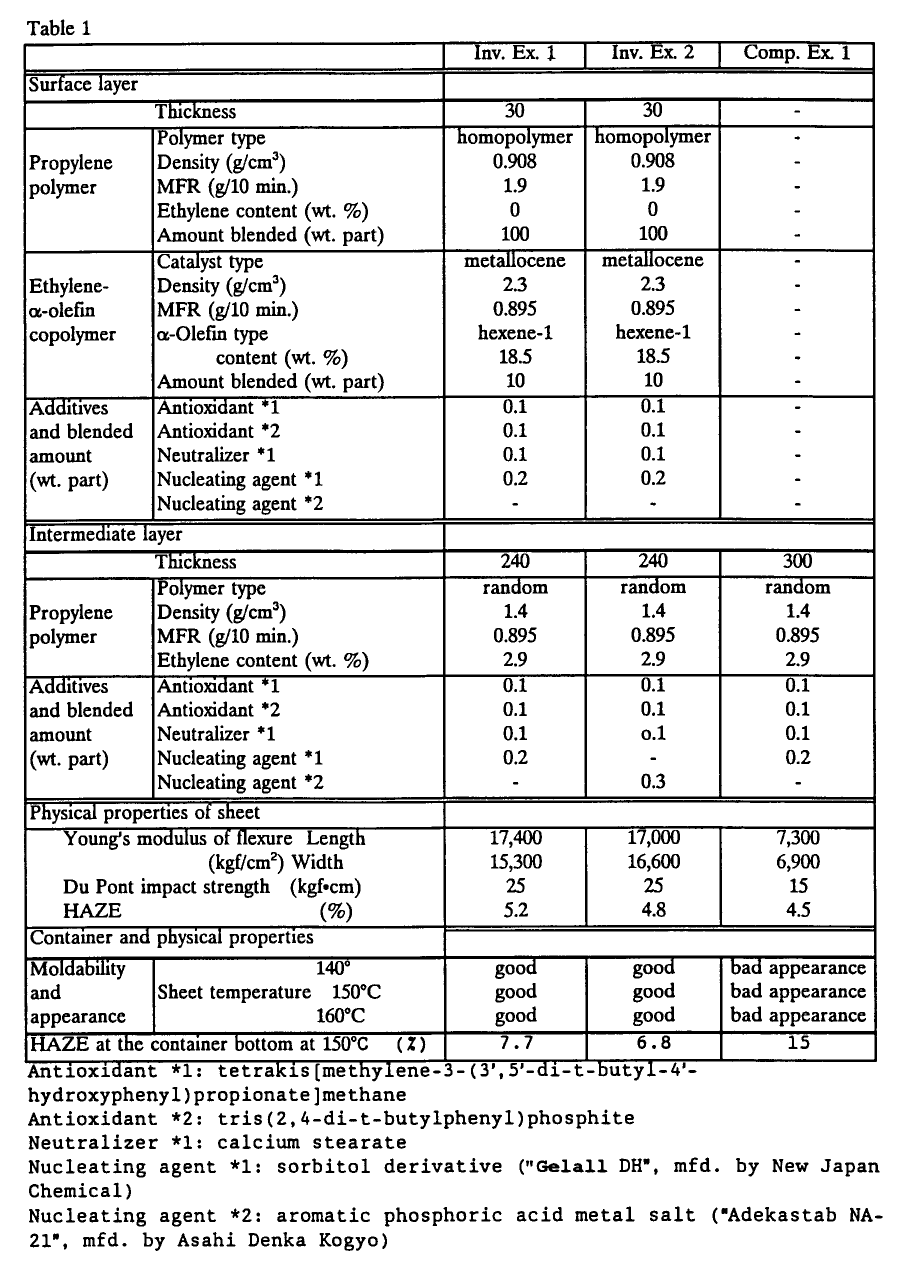

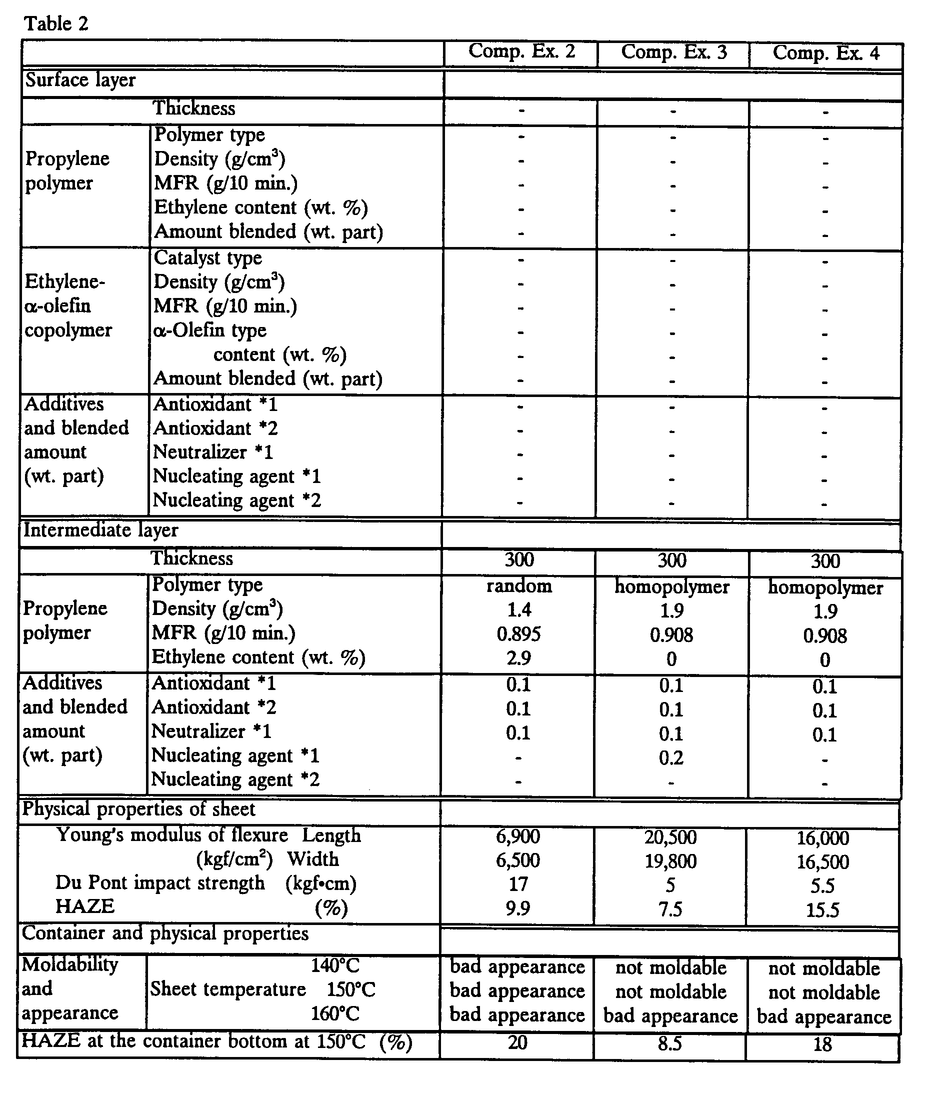

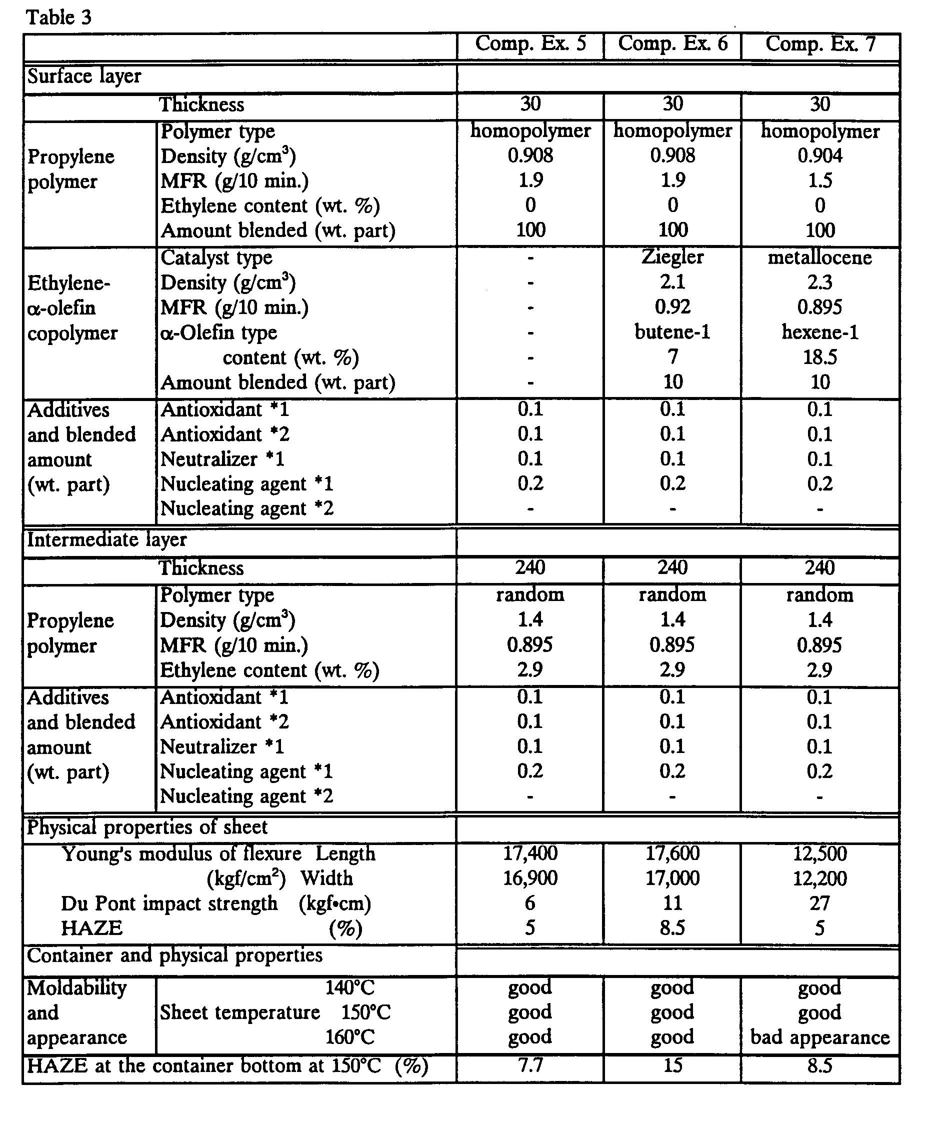

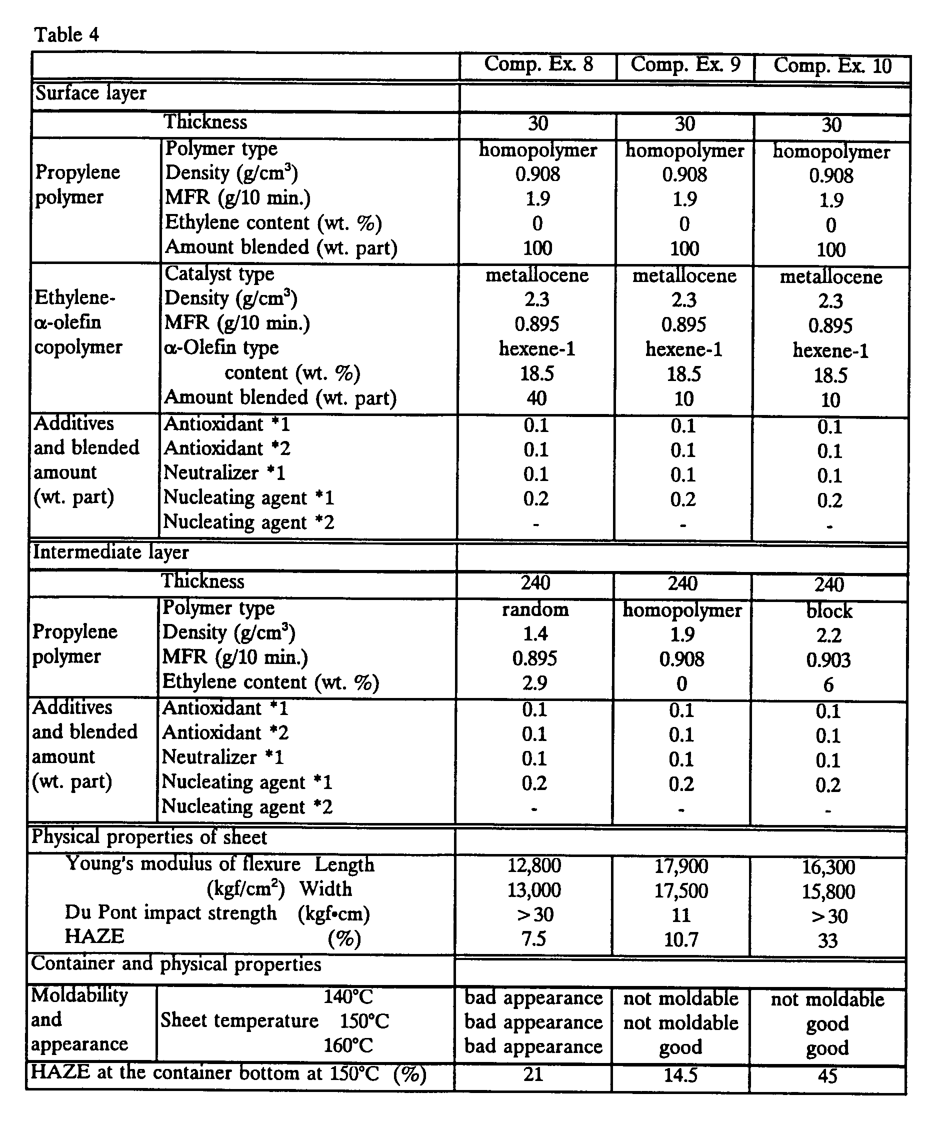

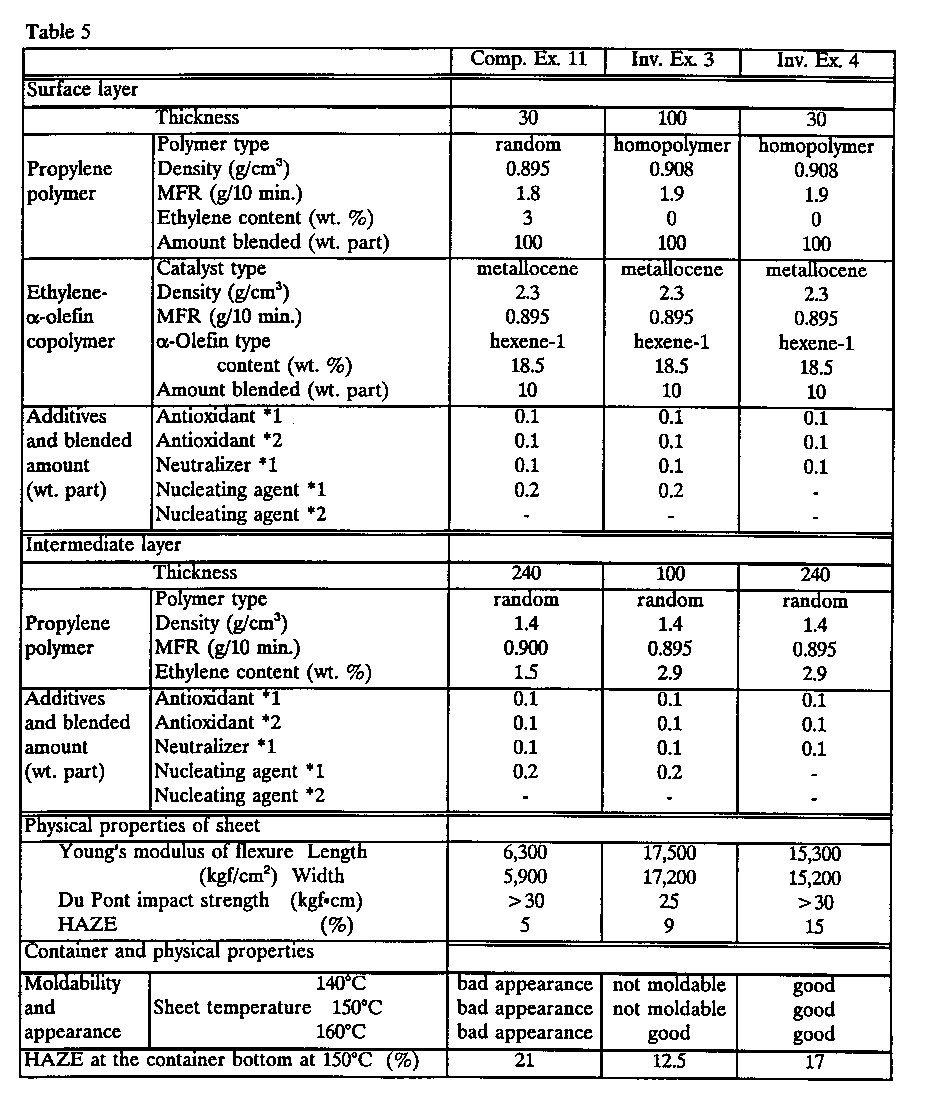

### Inventive Examples 5 to 8 and Comparative Examples 12 to 22

Sheets were produced and evaluated in the same manner as described in Inventive Example 1, except that the resins for surface layers and intermediate layer use were changed as shown in Tables 6 to 10. The results are shown in Tables 6 to 10.

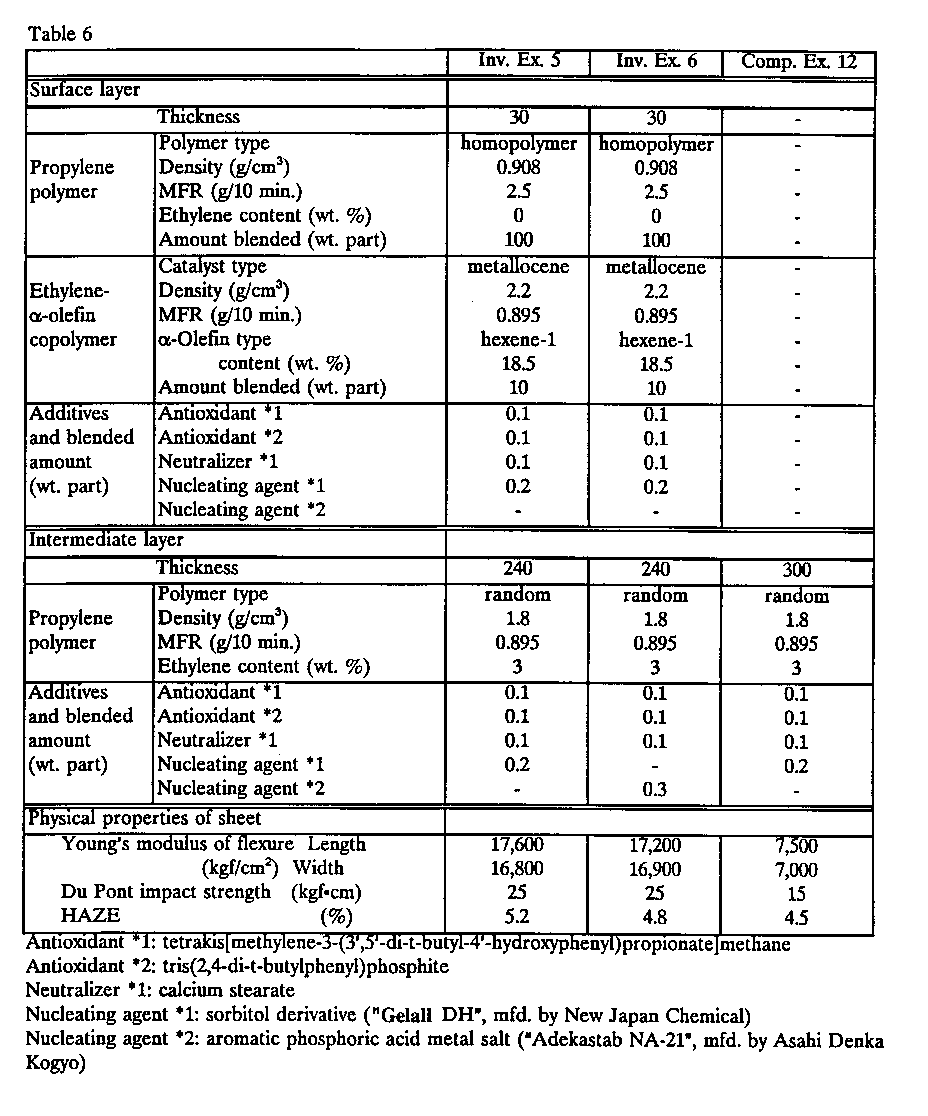

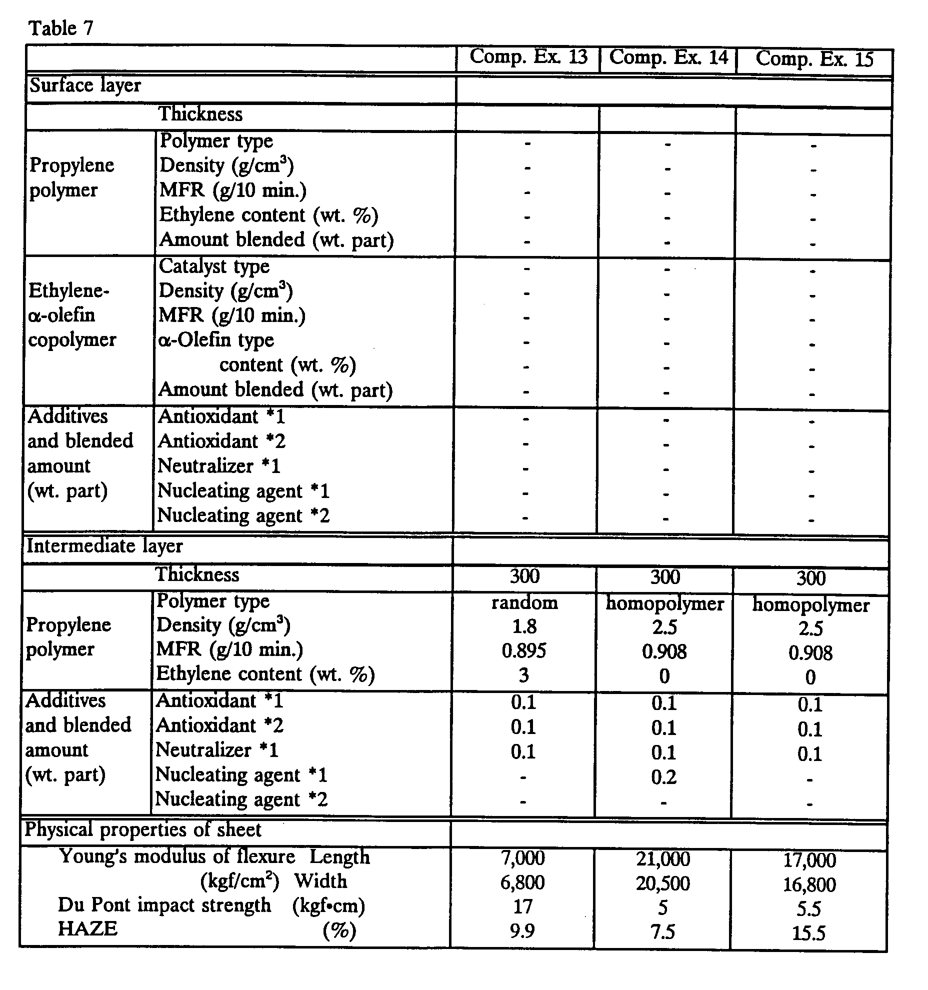

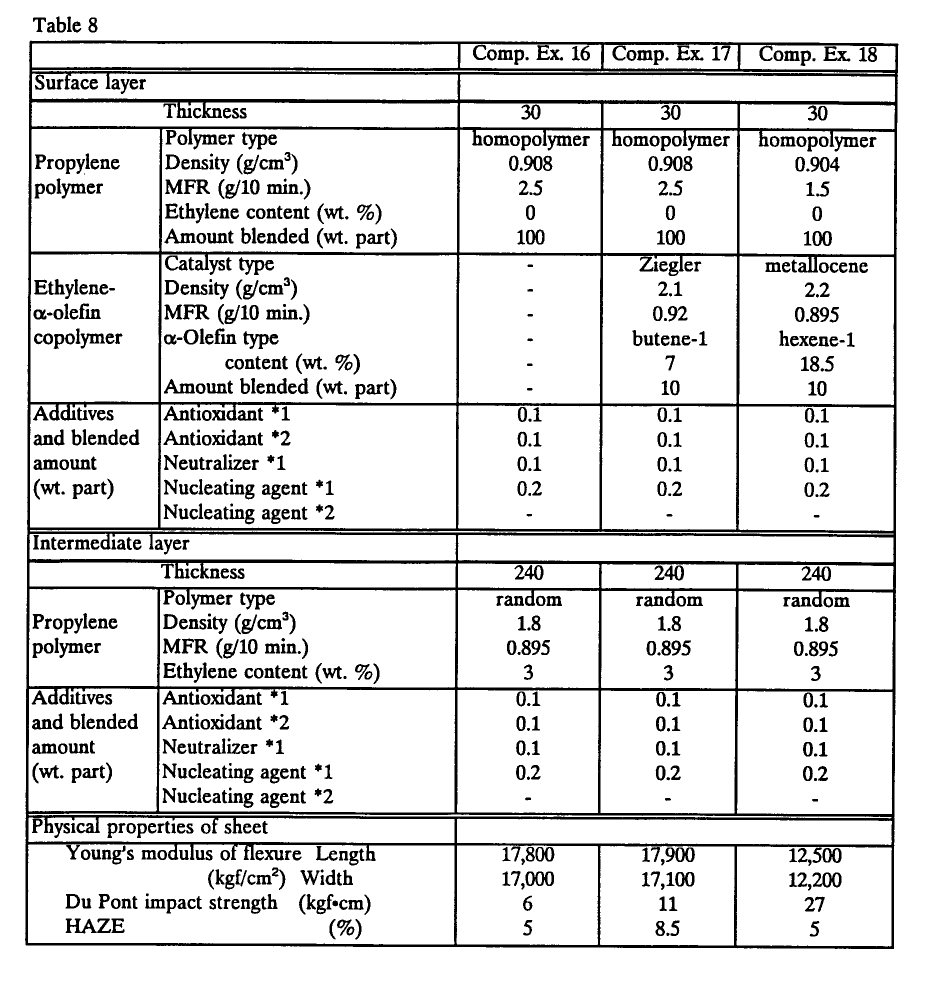

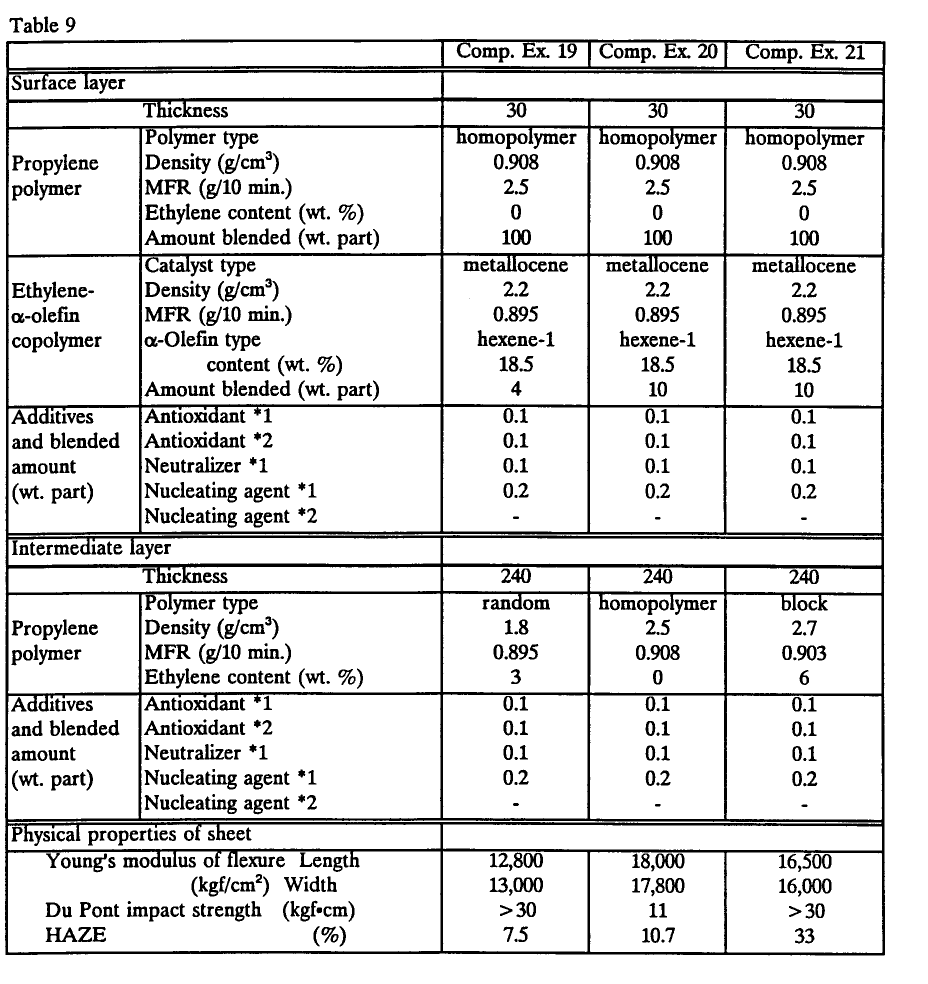

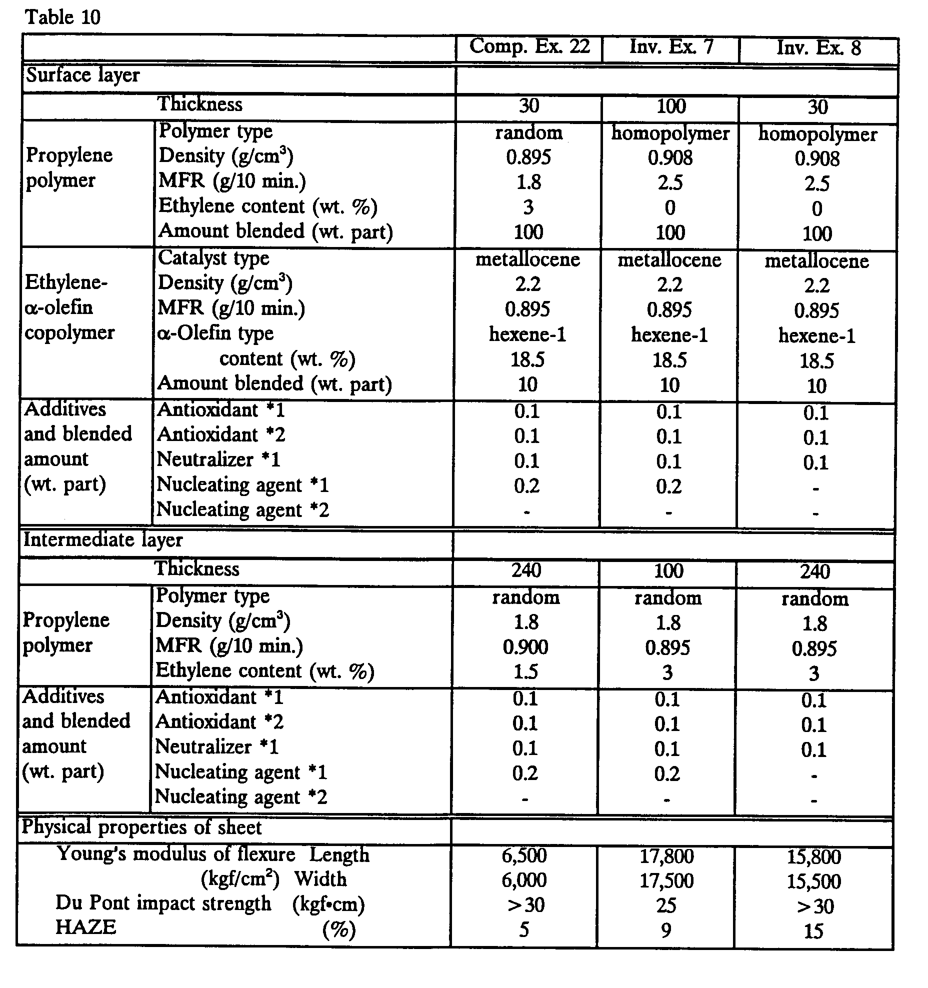

Thus, since the propylene polymer laminate sheet of the present invention has excellent glossiness, transparency, rigidity and impact resistance, it can be used not only directly as such but also as containers of food articles which are taken after their heating in a microwave oven.

## Claims

1. A propylene polymer laminate which comprises:
surface layers, each layer being comprised of a thermoplastic resin composition in which 100 parts by weight of a propylene polymer having a density of 0.905 g/cm³ or more and a melt flow rate (MFR) of from 0.7 to 20 g/10 min. is blended with 1 to 20 parts by weight of an ethylene-_{α}-olefin random copolymer which is polymerized using a metallocene catalyst and has an ethylene content of from 99 to 50% by weight, a density of 0.930 g/cm³ or less and an MFR value of from 0.3 to 20 g/10 min.; and
an intermediate layer comprised of a propylene-α-olefin random copolymer having an MFR value of from 0.3 to 5 g/10 min. and a propylene content of from 99 to 90% by weight.

2. The propylene polymer laminate according to claim 1, wherein 0.03 to 1 part by weight of a nucleating agent is further blended based on 100 parts by weight of the respective propylene polymer in at least one layer of the surface layers and intermediate layer.

3. The propylene polymer laminate according to claim 1 or 2, wherein the propylene-α-olefin random copolymer in the intermediate layer is a propylene-ethylene random copolymer.

4. The propylene polymer laminate according to any of claims 1 to 3, wherein the laminate has a whole thickness of from 0.10 to 2 mm, and both surface layers are formed in such a way that their total thickness has a ratio of from 2 to 40% based on the whole thickness.

5. A container comprising the propylene polymer according to any of claims 1 to 4.

6. A sheet comprising the propylene polymer according to any of claims 1 to 4.
